# EUROPÄISCHE PATENTSCHRIFT

(11) **EP 4 111 008 B1**
(45) Veröffentlichungstag und Bekanntmachung des Hinweises auf die Patenterteilung: **02.08.2023**
(21) Anmeldenummer: 21707668.6
(22) Anmeldetag: 22.02.2021
(51) Int. Cl.: E04B 1/76, E04B 1/14, E04B 1/10, E04C 2/296, E04C 2/38, B27M 3/00, B32B 7/08, B32B 21/13, E04C 2/42, E04C 2/40, E04B 1/26, B27B 5/02, B27D 1/06, B27F 1/02, E04C 2/12

(54) **HOLZTAFELBAUELEMENT, VERFAHREN ZUR HERSTELLUNG EINES HOLZTAFELBAUELEMENTS UND VERWENDUNG EINES HOLZTAFELBAUELEMENTS**
WOODEN PANEL COMPONENT, METHOD FOR PRODUCING A WOODEN PANEL COMPONENT AND USE OF A WOODEN PANEL COMPONENT
COMPOSANT DE PANNEAU EN BOIS, PROCÉDÉ DE FABRICATION D'UN COMPOSANT DE PANNEAU EN BOIS ET UTILISATION D'UN COMPOSANT DE PANNEAU EN BOIS

(30) Priorität: 25.02.2020 DE 102020104929
(43) Veröffentlichungstag der Anmeldung: 04.01.2023
(73) Patentinhaber: Domschat, Frank, 79618 Rheinfelden (DE)
(72) Erfinder: Domschat, Frank, 79618 Rheinfelden (DE)
(74) Vertreter: Mertzlufft-Paufler, Cornelius
(86) Internationale Anmeldenummer: PCT/EP2021/054301
(87) Internationale Veröffentlichungsnummer: WO 2021/170530

(56) Entgegenhaltungen:
- WO-A1-2018/147847
- FR-A1- 2 559 518

## Beschreibung

Die Erfindung betrifft ein Holztafelbauelement, ein Verfahren zur Herstellung eine Holztafelbauelements sowie die Verwendung eines Holztafelbauelements.

Holztafelbauelemente sind aus der Praxis in unterschiedlichen Ausführungsformen vorbekannt. Ein Holztafelbauelement, das Rahmenschenkel mit dazwischen angeordneten Querstreben aufweist, ist beispielsweise aus der Druckschrift FR 2 559 518 A1 vorbekannt. Holztafelbauelemente werden im Holztafelbau beispielsweise als Holztafelbauwände zur Errichtung von Gebäuden wie Fertighäusern verwendet. Der Vorteil der Holztafelbauelemente besteht darin, dass sie in einem Werk vorgefertigt werden können. Zur Errichtung eines Gebäudes werden die vorgefertigten Holztafelbauelemente dann auf die Baustelle gebracht und vor Ort verbaut. Durch den hohen Grad an Vorfertigung lässt sich ein Gebäude mithilfe derartiger Holztafelbauelemente sehr zügig errichten.

Holztafelbauelemente können bei Bedarf mit Wandöffnungen beispielsweise für Fenster und/oder Türen versehen werden. Bei der Konstruktion und Herstellung der Holztafelbauelemente ist es allerdings erforderlich, die Position der Wandöffnungen für etwaige Fenster und/oder Türen vorher zu kennen, um die für die Aussteifung des Holztafelbauelements erforderlichen Stützen innerhalb eines Rahmens des Holztafelbauelements entsprechend der Position der Ausschnitte vorsehen zu können. Für eine vollautomatisierte Fertigung derartiger Holztafelbauelemente ist dies nachteilig. Zwar ist eine Vorfertigung der Holztafelbauelemente möglich, jedoch muss die Vorfertigung der Holztafelbauelemente dabei in der Regel unter Beachtung der kundenspezifischen Anforderungen beispielsweise hinsichtlich etwaiger Wandöffnungen für Fenster und/oder Türen erfolgen.

Aufgabe der Erfindung ist es daher zunächst, ein Holztafelbauelement und ein Verfahren der eingangs genannten Art bereitzustellen, die eine möglichst auftragsunabhängige Vorfertigung von Holztafelbauelementen begünstigen.

Diese Aufgabe wird mit den Merkmale der unabhängigen Ansprüche 1, 10 und 11 gelöst.

Zur Lösung der Aufgabe wird zunächst ein Holztafelbauelement der eingangs genannten Art vorgeschlagen, das die Mittel und Merkmale des unabhängigen, auf ein derartiges Holztafelbauelements gerichteten Anspruchs umfasst.

Das erfindungsgemäße Holztafelbauelement kann als Basiselement genutzt werden, in das sich innerhalb kürzester Zeit Wandöffnungen in gewünschter Form und/oder Anzahl einbringen lassen, um beispielsweise Tür- und/oder Fensterausschnitte kundenspezifisch vorzusehen. Die Grundkonstruktion des Holztafelbauelements, die sich auf die vier innerhalb des Rahmens angeordneten Lagen von Querstreben stützt, kann auf bisher üblicherweise verwendete Stützbalken innerhalb des Rahmens verzichten, deren Positionierung innerhalb des Rahmens in Abhängigkeit von gewünschten Wandöffnungen gewählt werden muss. Die Lagen aus Querstreben bilden ein gleichmäßiges Netz aus Kraftstützen innerhalb des Rahmens, das ein gleichmäßigere Verteilung auftretender Kräfte innerhalb des Rahmens als einzelne Stützbalken erlaubt, wie sie im Holztafelbau bisher Verwendung finden. Auf diese Weise kann das erfindungsgemäße Holztafelbauelement unabhängig von einem konkreten Kundenauftrag zunächst als Grundelement vorgefertigt und erst nachträglich kundenspezifisch konfektioniert und dabei beispielsweise mit Wandöffnungen versehen werden.

Durch die zumindest zwei Decklagen von schräg innerhalb des Rahmens ausgerichteten Querstreben erhält die Holtafelbauwand die erforderliche Stabilität. Die Querstreben der vier Lagen können in einer Dichte innerhalb des Rahmens vorgesehen werden, die eine ausreichende Stabilität des Holztafelbauelements ermöglicht. Werden einzelne Querstreben oder Gruppen von Querstreben bei der Erzeugung einer Wandöffnung durchtrennt, steht in den vier Lagen von Querstreben immer noch eine ausreichende Anzahl von als Kraftstützen nutzbaren Querstreben zur Verfügung. Da die vier Lagen aus Querstreben ein weitgehend oder gar vollständig homogenes Netz aus Querstreben innerhalb des Rahmens bilden können, lassen sich Wandöffnungen an nahezu beliebiger Position in das vorgefertigte Holztafelbauelement einbringen, ohne die Stabilität des Holztafelbauelements signifikant zu beeinträchtigen.

Innerhalb einer Lage benachbarte Querstreben können einen Abstand von beispielsweise 30,5 cm zueinander aufweisen. Auf diese Weise haben die vier Lagen von Querstreben innerhalb des Rahmens des Holztafelbauelements eine ausreichende Strebendichte, die eine zuverlässige Stabilisierung des Holztafelbauelements erlaubt, auch wenn eine oder mehrere Wandöffnungen zur Erzeugung von Fenster- oder Türausschnitten nachträglich in das Holztafelbauelement eingebracht werden.

Auf diese Weise führt die erfindungsgemäße Konstruktion des Holztafelbauelements dazu, dass das Holztafelbauelement als vorgefertigtes Holztafelbauelement in einem Schritt und mit einem hohen Grad an Standardisierung hergestellt werden kann.

In einem nachgelagerten Schritt können die kundenspezifischen Arbeiten an dem fertigen Grundelement vorgenommen und dabei möglicherweise gewünschte Wandöffnungen für Fenster- und/oder Türausschnitte individuell erzeugt werden.

Durch die Trennung der Arbeitsschritte ist eine besonders ökonomische Herstellung der Holztafelbauelemente möglich. Die Holztafelbauelemente können beispielsweise mit einer Höhe von 2,5, 2,75 bzw. 3,5 m und einer Länge von 12 oder 14 m auf Vorrat hergestellt und anschließend bei Bedarf auf die gewünschte Länge gekürzt werden. Natürlich ist es möglich, die Holztafelbauelemente in jeder praktikablen Länge und Höhe herzustellen. In einem nachfolgenden Arbeitsschritt lassen sich die Holztafelbauelemente kundenspezifisch konfektionieren und beispielsweise die erwähnten Wandöffnungen einbringen. Durch die erfindungsgemäße Konstruktion kann das Holztafelbauelement unabhängig von Anzahl und Position der Wandöffnungen in dem Holztafelbauelement immer denselben Aufbau haben. Dies war bei den aus der Praxis vorbekannten Holztafelbauelementen aufgrund ihrer innerhalb der Rahmen in der Regel rechtwinklig verlaufenden Stützbalken bisher so nicht möglich.

Bei einer bevorzugten Ausführungsform des Holztafelbauelements ist vorgesehen, dass die Querstreben mit den sich gegenüberliegenden Rahmenschenkeln verbunden sind. Dies kann die Stabilität des Holztafelbauelements und ihrer Rahmenkonstruktion zusätzlich erhöhen. Die Verbindung zwischen den Querstreben und den sich gegenüberliegenden Rahmenschenkeln kann beispielsweise formschlüssig, kraftschlüssig und/oder stoffschlüssig erfolgen. Insbesondere ist es möglich, die Querstreben, insbesondere an ihren Enden, mit den Rahmenschenkeln zu verkleben und/oder zu verleimen. Ferner ist es möglich, die Querstreben mit Hilfe von Klammern, Nägeln, Schrauben, Zahnscheiben oder Hartholznägeln mit den Rahmenschenkeln zu verbinden.

Die Querstreben der vier Lagen von Querstreben können in einem spitzen oder in einem stumpfen Winkel zu zumindest einem der beiden Rahmenschenkel innerhalb des Rahmens ausgerichtet sein. Vorzugsweise spannen die Querstreben mit den Rahmenschenkeln jeweils einen von einem rechten Winkel abweichenden Winkel auf. Bevorzugt sind die Querstreben der vier Lagen von Querstreben maximal 60° zu einem der beiden Rahmenschenkel geneigt.

Eine besonders gleichmäßige Kraftverteilung innerhalb des Rahmens des Holztafelbauelements kann sich ergeben, wenn die Querstreben von zwei benachbarten Lagen gegengleich geneigt sind. Ferner können innerhalb einer Lage benachbarte Querstreben einen Abstand zwischen 10 cm und 70 cm, besonders bevorzugt einen Abstand von 30.5 cm zueinander aufweisen. Die Anordnung von Querstreben innerhalb einer Lage benachbarter Querstreben in einem Abstand von 30.5 cm zueinander hat sich als besonders vorteilhaft herausgestellt, da diese Anordnung einen guten Kompromiss zwischen Materialeinsatz, Gewicht, und Belastbarkeit des Holztafelbauelements darstellt.

Vorteilhaft kann es sein, wenn die vier Lagen von Querstreben innerhalb des Rahmens in einer quer zur Längserstreckung der Rahmenschenkel des Rahmens ausgerichteten Tiefenrichtung versetzt zueinander angeordnet sind. Erfindungsgemäß sind die Lagen von Querstreben entlang einer gesamten, quer zur Längserstreckung der Rahmenschenkel messbaren Tiefe des Rahmens, versetzt zueinander angeordnet. Eine in Tiefenrichtung messbare Gesamtdicke der Lagen von Querstreben kann dabei so groß wie eine Tiefe des Rahmens sein. Die Lagen sind somit in unterschiedlichen, zu einer Längserstreckungsrichtung der Rahmenschenkel parallelen Ebenen innerhalb des Rahmens angeordnet. Auf diese Weise bilden die innerhalb des Rahmens angeordneten Lagen von Querverstrebungen ein den Rahmen des Holztafelbauelements aussteifendes Netz. Dies insbesondere dann, wenn sich die Querstreben benachbarter Lagen kreuzen und/oder in unterschiedliche Richtungen geneigt sind.

Querstreben benachbarter Lagen können zur zusätzlichen Aussteifung des Holztafelbauelements miteinander verbunden sein. Dies kann beispielsweise formschlüssig, kraftschlüssig, und/oder stoffschlüssig erfolgen. Als stoffschlüssige Verbindung zwischen Querstreben benachbarter Lagen von Querstreben kommt beispielsweise eine Verklebung und/oder Verleimung der Querstreben in Frage. Eine formschlüssige beziehungsweise kraftschlüssige Verbindung zwischen Querstreben benachbarter Lagen lässt sich beispielsweise mittels Nägeln, Schrauben, Klammern, Zahnscheiben und/oder Hartholznägeln erzielen. Wenn die Querstreben benachbarter Lagen sich kreuzende Querstreben sind, kann es zweckmäßig sein, die Querstreben in ihren jeweiligen Kreuzungspunkten miteinander zu verbinden.

Die beiden Rahmenschenkel weisen erfindungsgemäß für jede Lage von Querstreben jeweils ein Raster von Haltepunkten auf. Dabei können die Raster von Haltepunkten für die einzelnen Lagen an dem jeweiligen Rahmenschenkel versetzt zueinander angeordnet sein. Die Raster von Haltepunkten können ein Rastermaß aufweisen, das zwischen 10 und 70 cm, insbesondere 30,5 cm beträgt. Rastermaß in diesem Zusammenhang kann bedeuten, dass die Haltepunkte des jeweiligen Rasters einen Abstand von 10 cm bis 70 cm, insbesondere einen Abstand von 30,5 cm zueinander aufweisen. Die Haltepunkte der Raster sind erfindungsgemäß in Haltevertiefungen angeordnet sein. Die Haltevertiefungen können beispielsweise als Haltenuten ausgebildet sein, an/in denen die Querstreben mit ihren Enden an den Rahmenschenkeln gemäß dem jeweiligen Raster an Haltepunkten befestigt sind.

Bei einer bevorzugten Ausführungsform des Holztafelbauelements können die Haltenuten quer zur Längserstreckung der beiden Rahmenschenkel in einem Innenraum des Rahmens zugewandten Innenseiten der Rahmenschenkel eingebracht sein.

Die Querstreben können an ihren Haltepunkten formschlüssig, kraftschlüssig und/oder stoffschlüssig mit den Rahmenschenkeln des Rahmens verbunden sein. Als formschlüssige, kraftschlüssige und/oder stoffschlüssige Verbindungen können beispielsweise die bereits zuvor erwähnten Arten von Verbindungen verwendet werden.

Ein Abstand zwischen zwei benachbarten Haltevertiefungen, insbesondere zwischen zwei benachbarten Haltenuten, in zumindest einem Rahmenschenkel kann dem halben Abstand zwischen zwei benachbarten Haltepunkten eines, beispielsweise des zuvor erwähnten, Rasters von Haltepunkten einer Lage von Querstreben und/oder dem halben Abstand zwischen zwei benachbarten Querstreben innerhalb einer Lage von Querstreben entspricht. Durch die damit erzielte Dichte an Haltevertiefungen lässt sich eine ausreichend hohe Dichte an Verstrebungen erzielen, wenn diese in zumindest zwei, vorzugsweise zueinander versetzten Lagen zwischen den Rahmenschenkeln angeordnet werden.

Der Rahmen des Holztafelbauelements kann zumindest einseitig, vorzugsweise beidseitig eine Beplankung aufweisen. Die Beplankung kann aus Platten bestehen, die beispielsweise aus OSB-Werkstoff, Gipskarton, Beton, Lehm, Gips, Naturgips, Holzfasern, zementgebundenen Bauplatten gebildet sind. Als Beplankung kann auch eine Holzschalung dienen. Die zumindest eine Beplankung kann an den Rahmenschenkeln des Rahmens und/oder an den Querstreben zumindest einer Lage von Querstreben befestigt sein. In diesem Zusammenhang kann es vorteilhaft sein, wenn zumindest eine Lage von Querstreben bündig mit einer Außenseite der Rahmenschenkel abschließend innerhalb des Rahmens angeordnet ist. Die Befestigung der zumindest einen Beplankung des Holztafelbauelements kann beispielsweise formschlüssig, kraftschlüssig und/oder stoffschlüssig erfolgen. Formschlüssige, kraftschlüssige und/oder stoffschlüssige Verbindungen wurden bereits zuvor erwähnt. Die zuvor erwähnten Verbindungsarten können auch zur Befestigung der Beplankung an dem Rahmen und/oder den Querstreben verwendet werden.

Zwischenräume innerhalb des Rahmens können mit einem Füllstoff, insbesondere mit Dämmstoff ausgefüllt sein. Auf diese Weise kann das Holztafelbauelement beispielsweise mit einer Schallisolation und/oder Wärmeisolation ausgestattet werden. Bei einer Ausführungsform des Holztafelbauelements ist vorgesehen, dass die zuvor erwähnten Zwischenräume mit Dämmstoffplatten lagenweise und/oder mit gebundenen und/oder ungebundenen Schüttungen ausgefüllt sind.

Der Rahmen und/oder die Querstreben der Lagen von Querstreben können vorzugsweise aus Holz und/oder aus einem Holzwerkstoff bestehen.

Das zuvor erläuterte Holztafelbauelement eignet sich zur Verwendung als Innenwand, Außenwand und/oder Vorsatzwand in und/oder an einem Gebäude. Besonders vorteilhaft lässt sich das Holztafelbauelement auch zur Renovierung, Sanierung und/oder energetischen Sanierung von Bestandsgebäuden verwenden.

Bei der energetischen Sanierung eines Gebäudes kann das mit einer Wärmedämmung ausgestattete Holztafelbauelement beispielsweise als Vorsatzwand an einer Fassade des zu sanierenden Gebäudes angebracht werden. Zuvor kann das Holztafelbauelement mit einem Lochmuster aus Wandöffnungen versehen werden, das einem Lochmuster in der Fassade vorhandener Fensteröffnungen entspricht.

Das Holztafelbauelement kann auch als Fassadenelement einer Vorhangfassade oder einer Modulfassade verwendet werden.

Zur Lösung der Aufgabe wird auch ein Verfahren zur Herstellung eines Holztafelbauelements nach einem der auf solche gerichteten Ansprüche vorgeschlagen, das die Verfahrensschritte des unabhängigen, auf ein derartiges Verfahren gerichteten Anspruchs umfasst. Erfindungsgemäß umfasst das Verfahren zumindest die nachfolgenden Schritte:
▪ Bereitstellung von zwei sich gegenüberliegenden Rahmenschenkeln eines Rahmens des Holztafelbauelements, Einbringen einer ersten Lage von Querstreben zwischen die beiden Rahmenschenkel, wobei die Querstreben schräg zu den beiden Rahmenschenkeln ausgerichtet werden oder sind,
▪ Befestigung von Querstreben der ersten Lage an den beiden sich gegenüberliegend angeordneten Rahmenschenkeln des Rahmens,
▪ Einbringen zumindest einer weiteren Lage von Querstreben zwischen die beiden Rahmenschenkel, wobei die Querstreben schräg zu den Rahmenschenkeln ausgerichtet werden oder sind,
▪ Befestigung von Querstreben der zumindest einen weiteren Lage an den beiden Rahmenschenkeln.

Vorzugsweise werden sämtliche Querstreben der ersten und der zumindest einen weiteren Lage an den beiden Rahmenschenkeln des Rahmens befestigt.

Die Befestigung der Querstreben der ersten Lage und der Querstreben jeder weiteren Lage von Querstreben kann auf die bereits zuvor erläuterte Art und Weise formschlüssig, kraftschlüssig und/oder stoffschlüssig erfolgen.

Die beiden sich gegenüberliegenden Rahmenschenkel, zwischen die die Lagen von Querstreben eingebracht werden, sind vorzugsweise Längsschenkel des Rahmens des herzustellenden Holztafelbauelements.

Bei der erfindungsgemäßen Ausführungsform des Verfahrens, das quasi eine Herstellung von Holztafelbauelementen aus einem Endlosstrang erlaubt, ist vorgesehen, dass zunächst mehrere Rahmenschenkel, zu zwei sich gegenüberliegenden, voneinander beabstandeten Strängen von Rahmenschenkeln verbunden werden. Dies hat das Ziel, einen Segmentstrang miteinander verbundener Segmente von Holztafelbauelementen zu erzeugen, von dem einzelne Segmente in beliebiger Länge abgetrennt werden. Als Segment kann in diesem Zusammenhang ein unfertiges Holztafelbauelement verstanden werden.

Vorzugsweise ist hierbei vorgesehen, dass je Strang zumindest zwei Rahmenschenkel miteinander verbunden, insbesondere keilverzinkt werden. Auf diese Weise werden zwei sich gegenüberliegende Stränge aus mehreren Rahmenschenkeln hergestellt, zwischen die dann die zumindest zwei Lagen von Querstreben eingebracht werden können. Auf diese Weise lassen sich zunächst beliebig lange, mit Querstreben verbundene Stränge von Rahmenschenkeln erzeugen, die, wie weiter unten noch näher ausgeführt wird, anschließend auf die gewünschte Länge gekürzt werden, um einzelne Holztafelbauelemente herzustellen.

Bei einer Ausführungsform des Verfahrens ist vorgesehen, dass Haltevertiefungen, insbesondere die zuvor bereits erwähnten Haltenuten, in die Rahmenschenkel eingebracht, beispielsweise eingefräst werden. Dies erfolgt vorzugsweise bevor die erste der zumindest zwei Lagen von Querstreben zwischen die beiden sich gegenüberliegend auf Abstand zueinander angeordneten Rahmenschenkel eingebracht wird.

Bei einer Ausführungsform des Verfahrens zur Herstellung eines Holztafelbauelements sind die nachfolgenden Schritte vorgesehen:
▪ Bereitstellung eines Rahmens,
▪ Einbringen einer ersten Lage von Querstreben in den Rahmen, wobei die Querstreben schräg zu zwei sich gegenüberliegenden Rahmenschenkeln des Rahmens ausgerichtet werden oder sind,
▪ Befestigung der Querstreben der ersten Lage an den beiden sich gegenüberliegend angeordneten Rahmenschenkeln des Rahmens,
▪ Einbringen zumindest einer weiteren Lage von Querstreben in den Rahmen, wobei die Querstreben schräg zu zwei sich gegenüberliegenden Rahmenschenkeln des Rahmens ausgerichtet werden oder sind,
▪ anschließende Befestigung der Querstreben der zumindest einen weiteren Lage an den beiden sich gegenüberliegend angeordneten Rahmenschenkeln des Rahmens.

Bei dieser Ausführungsform wird somit ein Rahmen bereitgestellt und dann mit zumindest zwei Lagen von Querstreben befüllt und ausgesteift.

Um dem Holztafelbauelement eine noch größere Stabilität zu verleihen, können Querstreben benachbarter Lagen von Querstreben untereinander verbunden werden. Die Verbindung kann hier vorzugsweise an Kreuzungspunkten der Querstreben und/oder formschlüssig, kraftschlüssig und/oder stoffschlüssig erfolgen.

In diesem Zusammenhang kann es günstig sein, wenn die zumindest zwei Lagen von Querstreben so in den Rahmen eingebracht werden, dass sich Querstreben der zumindest zwei Lagen kreuzen.

Zwischenräume innerhalb des Rahmens können mit einem Füllstoff, beispielsweise mit einem Dämmstoff gefüllt werden. Dies kann lagenweise beispielsweise mit Dämmstoffplatten erfolgen oder gegebenenfalls auch mit gebundenen und/oder ungebundenen Schüttungen.

Der Füllstoff kann vorzugsweise lagenweise und hier besonders bevorzugt zusammen mit den Lagen von Querstreben eingebracht werden.

Wird der Füllstoff in Form von Lagen oder Matten zwischen die Rahmenschenkel und in die Zwischenräume zwischen den Querstreben eingebracht, kann es zweckmäßig sein, die Querstreben und Lagen von Füllstoff nacheinander einzubringen, bis eine Lage von Querstreben mit in den Zwischenräumen zwischen den Querstreben eingefülltem Füllstoff fertiggestellt ist.

Die Rahmenschenkel können bei einer bevorzugten Ausführungsform des Verfahrens auf einer ersten Beplankung angeordnet und mit der Beplankung verbunden werden. Bevorzugt werden die Rahmenschenkel hierbei als Stränge von miteinander verbundenen Rahmenschenkeln auf einer ersten Beplankung angeordnet und vorzugsweise mit der Beplankung verbunden. Dies erfolgt bevorzugt, bevor die zumindest zwei Lagen von Querstreben zwischen die Rahmenschenkel eingebracht werden.

Ferner können die Rahmenschenkel, insbesondere nach dem Einbringen der Lagen von Querstreben und/oder des zuvor bereits erwähnten Füllstoffs, mit einer zweiten Beplankung belegt und insbesondere verbunden werden. Die zweite Beplankung kann an einer Seite der Rahmenschenkel angeordnet werden, die der Seite der Rahmenschenkel mit der zuvor bereits erwähnten ersten Beplankung abgewandt ist.

Zum Ablängen eines Segments zur Herstellung eines Holztafelbauelements können die Rahmenschenkel, insbesondere die Stränge von Rahmenschenkeln quer zur ihrer Längserstreckungsrichtung durchtrennt werden. Dies erfolgt vorzugsweise nach dem Einbringen der zumindest zwei Lagen von Querstreben zwischen die beiden Rahmenschenkel und gegebenenfalls auch nach Einbringen von Füllstoff in die Zwischenräume zwischen die Querstreben der zumindest zwei Lagen von Querstreben. Das Segment kann aus einem Segmentstrang noch miteinander verbundener Segmente von Holztafelbauelementen abgetrennt werden.

Auf diese Weise lässt sich ein Segment zur Herstellung eines Holztafelbauelements von einem Segmentstrang noch verbundener, halbfertiger Holztafelbauelemente in der gewünschten Länge abtrennen und zur Endbearbeitung bereitstellen.

Anschließend kann das abgetrennte Segment eines Holztafelbauelements endbearbeitet werden, um den Rahmen des Holztafelbauelements durch die Anbringung von zwei weiteren Rahmenschenkeln, die dann als Querschenkel bezeichnet werden können, zu fertigen. Hierfür kann eine Füllung aus Querstreben und/oder Füllstoff an einem Trennschnitt des Segments entsprechend einer Stärke eines anzubringenden Rahmenschenkels, insbesondere eines Querschenkels entfernt, insbesondere abgefräst werden.

Anschließend können die bereits zuvor erwähnten Rahmenschenkel, insbesondere die Querschenkel des Rahmens, mit den Rahmenschenkeln zu einem geschlossenen Rahmen verbunden werden. Ferner ist es möglich, eine zweite Beplankung erst dann auf den Rahmen aufzulegen, wenn der Rahmen durch die Verbindung der Querschenkel mit den Rahmenschenkeln geschlossen wurde.

Bei einer Ausführungsform des Verfahrens wird der Rahmen, vorzugsweise vor dem Einbringen der zumindest zwei Lagen von Querstreben, zunächst auf einer Beplankung abgelegt. Die Beplankung kann ihrerseits auf einer Fertigungsunterlage positioniert sein und stoffschlüssig, formschlüssig und/oder kraftschlüssig mit den Rahmenschenkeln des vorhandenen Rahmens verbunden werden. Werden Nägel, Schrauben und/oder Klammern oder Zahnschreiben oder Hartholznägel zur Befestigung der Beplankung an den Rahmenschenkeln verwendet, ist es möglich, die Nägel, Schrauben, Klammern, Zahnschreiben und/oder Hartholznägel von unten durch die Beplankung in die Rahmenschenkel einzubringen.

Auf diese Weise ist es möglich, die Beplankung des Rahmens des Holztafelbauelements vorzunehmen, ohne den Rahmen und die Beplankung zur Befestigung der Beplankung an dem Rahmen drehen zu müssen. Dies begünstigt die Fertigung besonders großformatiger Holztafelbauelemente.

Die zumindest eine Beplankung des Rahmens kann auf eine Fertigungsunterlage aufgelegt werden, bevor die Rahmenschenkel oder der Rahmen auf der Beplankung positioniert wird. Wird der Rahmen nicht auf einer Beplankung abgelegt, bevor die Lagen von Querstreben eingebracht werden, kann der Rahmen auch direkt auf einer Fertigungsunterlage abgelegt werden.

Als Fertigungsunterlage, auf die die Rahmenschenkel, der fertige Rahmen und/oder eine Beplankung des Holztafelbauelements abgelegt werden können, bevor beispielsweise die zumindest zwei Lagen von Querstreben eingebracht werden, kann ein Transportmittel, wie beispielsweise ein Förderband, ein Rollenförderer und/oder ein Transportwagen verwendet werden.

Auch bei der Variante des Verfahrens, bei der ein fertiger Rahmen eines Holztafelelements mit Lagen von Querstreben bestückt wird, kann der Rahmen, insbesondere nach dem Einbringen der Lagen von Querstreben und/oder nach dem optionalen Einbringen von Füllstoff, mit einer zweiten Beplankung belegt und/oder dabei verschlossen werden. Auf diese Weise wird ein geschlossenes Holztafelbauelement geschaffen, das beidseitig eine Beplankung aufweist.

In einem nachgelagerten Verfahrensschritt kann vorgesehen sein, dass zumindest eine Wandöffnung, beispielsweise für ein Fenster und/oder eine Tür in das Holztafelbauelement eingebracht wird, insbesondere nach beidseitiger Anbringung einer Beplankung,. Die Wandöffnung kann in das Holztafelbauelement eingesägt werden.

Die zumindest eine Wandöffnung kann bei einer weiteren Ausführungsform des Verfahrens anschließend mit einem Bauelement bestückt werden. Als denkbare Bauelemente können beispielsweise Fenster, Rollladen und/oder Türen verwendet werden.

Bei einer bevorzugten Ausführungsform des Verfahrens ist vorgesehen, dass zur Durchführung zumindest einzelner der zuvor erwähnten Verfahrensschritte zumindest ein Roboter verwendet wird. Auf diese Weise ist die vorzugsweise vollautomatisierte Herstellung derartiger Holztafelbauelemente möglich.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen in teilweise stark schematisierter Darstellung:

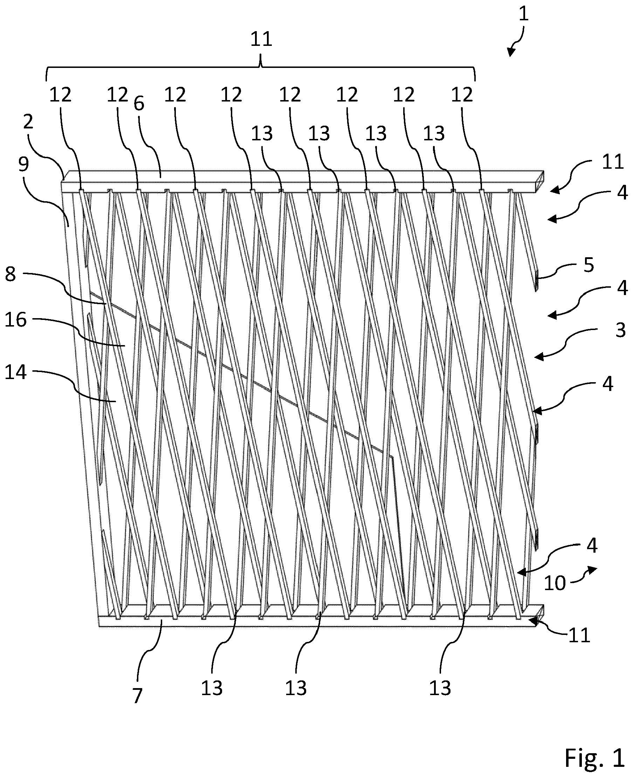

- Fig. 1:: eine teilausgebrochene, isometrische Darstellung eines die Erfindung realisierenden Holztafelbauelements, mit einem Rahmen, und insgesamt vier innerhalb des Rahmens versetzt zueinander angeordneten Lagen von Querstreben, die schräg zwischen einander gegenüberliegenden Rahmenschenkeln des Rahmens ausgerichtet sind,

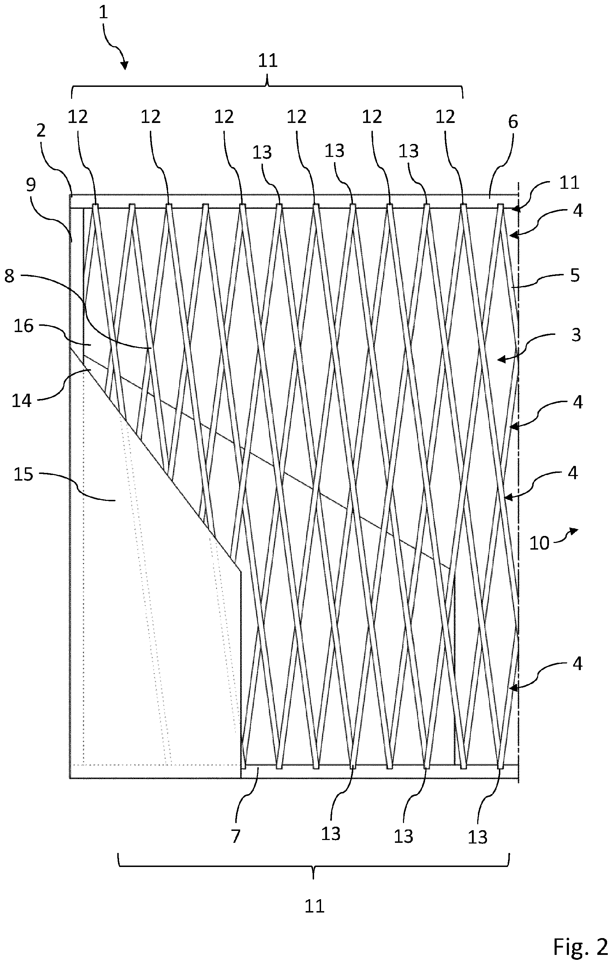

- Fig. 2:: eine teilausgebrochene Seitenansicht des in Figur 1 dargestellten Holztafelbauelements,
- Fig. 3:: eine Seitenansicht des Rahmens des in den Figuren 1 und 2 dargestellten Holztafelbauelements,
- Fig. 4:: eine entlang der in Figur 3 angedeuteten Linie A-A geschnittene Ansicht des Rahmens zur Veranschaulichung eines Rasters von Haltepunkten, an denen die Querstreben der vier Lagen an den Rahmenschenkeln des Rahmens des Holztafelbauelements befestigt sind,
- Fig. 5:: eine Seitenansicht des in den vorherigen Figuren dargestellten Holztafelbauelements mit zwei Wandöffnungen für eine Tür und ein Fenster, sowie
- Fig. 6 bis 10: perspektivische Darstellungen zur Veranschaulichungder Verfahrensschritte zur Herstellung einesHolztafelbauelements, wie es in den Figuren 1 bis 5 zumindest ausschnittsweise dargestellt ist.

Sämtliche Figuren zeigen zumindest Teile eines im Ganzen mit 1 bezeichneten Holztafelbauelements in Form einer Holztafelbauwand. Das Holztafelbauelement 1 umfasst einen Rahmen 2, der aus insgesamt vier, sich paarweise gegenüberliegend angeordneten Rahmenschenkeln 6 und 7 sowie 9 und 10 zusammengesetzt ist.

In einem von dem Rahmen 2 definierten Innenraum 3, also innerhalb des Rahmens 2 sind zumindest zwei und im gezeigten Ausführungsbeispiel des Holztafelbauelements 1 insgesamt vier Lagen 4 von Querstreben 5 angeordnet, die schräg zu zwei einander gegenüberliegenden Rahmenschenkeln 6 und 7 des Rahmens 2 ausgerichtet sind. Der Rahmenschenkel 6 ist ein in Gebrauchsstellung des dargestellten Holztafelbauelements 1 oberer, horizontal verlaufender Rahmenschenkel. Der Rahmenschenkel 7 des Rahmens 2 des Holztafelbauelements 1 ist ein unterer, in Gebrauchsstellung des Holztafelbauelements 1 horizontal verlaufender Rahmenschenkel.

Die Querstreben 5 der insgesamt vier Lagen 4 sind mit den beiden sich gegenüberliegenden Rahmenschenkeln 6 und 7 verbunden. Die Verbindung der Querstreben 5 mit den beiden Rahmenschenkeln 6 und 7 kann formschlüssig, kraftschlüssig und/oder stoffschlüssig erfolgen. Als formschlüssige und/oder kraftschlüssige Verbindung kommt beispielsweise eine Verbindung unter Verwendung von Nägeln, Schrauben, Stiften, Klammern, Zahnscheiben und/oder Hartholznägeln in Betracht. Eine stoffschlüssige Verbindung der Querstreben 5 mit den sich gegenüberliegenden Rahmenschenkeln 6 und 7 kann beispielsweise durch eine Verklebung und/oder Verleimung der Querstreben 5 mit den Rahmenschenkeln 6 und 7 erfolgen.

Die Querstreben 5 schließen mit den beiden Rahmenschenkeln 6 und 7 jeweils einen Winkel ein, der von einem rechten Winkel abweicht, also beispielsweise ein spitzer beziehungsweise ein stumpfer Winkel ist. Die spitzen Winkel, die zwischen den Querstreben 5 und den Rahmenschenkeln 6 und 7 messbar sind, betragen maximal 60°.

Der Aufbau des Holztafelbauelements 1 sieht vor, dass die Querstreben 5 von zwei benachbarten Lagen 4 gegengleich geneigt sind. Dies führt dazu, dass sich Querstreben 5 der beiden benachbarten Lagen 4 paarweise in einem Kreuzungspunkt 8 kreuzen. Innerhalb einer Lage 4 von Querstrebe 5 benachbart zueinander angeordnete Querstreben 5 weisen bei dem in den Figuren gezeigten Holztafelbauelement 1 einen Abstand von 30,5 cm zueinander auf.

Die insgesamt vier Lagen 4 von Querstreben 5 sind in unterschiedlichen, zu einer Längserstreckung der beiden Rahmenschenkel 6 und 7, die durch die Querstreben 5 miteinander verbunden werden, parallelen Ebenen innerhalb des Rahmens 2 und über die gesamte Tiefe des Rahmens 2 verteilt angeordnet.

Die beiden sich gegenüberliegenden Rahmenschenkel 6 und 7, mit denen die Querstreben 5 der vier Lagen 4 verbunden sind, sind Längsschenkel des Rahmens 2 des Holztafelbauelements 1. Die Rahmenschenkel 6 und 7 sind dabei länger als die beiden übrigen, rechtwinklig zu den Rahmenschenkeln 6 und 7 ausgerichteten Rahmenschenkeln 9 und 10 des Rahmens 2. Der Rahmen 2 hat somit eine rechteckige Form. Die beiden Rahmenschenkel 9 und 10 können auch als Querschenkel 9 und 10 des Rahmens 2 bezeichnet werden.

Die Figuren verdeutlichen, dass einige der Querstreben 5 der Lagen 4 innerhalb des Rahmens 2 zwischen einem der beiden horizontal ausgerichteten Rahmenschenkel 6 und 7 und einem der beiden senkrecht dazu ausgerichteten, kürzeren Rahmenschenkel 9 und 10 angeordnet und jeweils mit diesen verbunden sind. Dies begünstigt eine zusätzliche Aussteifung des Rahmens 2 und des damit ausgestatteten Holztafelbauelements 1.

Wie bereits zuvor erwähnt wurde, kreuzen sich Querstreben 5 benachbarter Lagen 4, da die Querstreben 5 benachbarter Lagen 4 in unterschiedlichen Richtungen geneigt sind. Sich kreuzende Querstreben 5 benachbarter Lagen 4 können bei Bedarf in ihrem jeweiligen Kreuzungspunkt 8 miteinander verbunden werden. Dies kann, wie bereits zuvor erwähnt, formschlüssig, kraftschlüssig und/oder stoffschlüssig erfolgen.

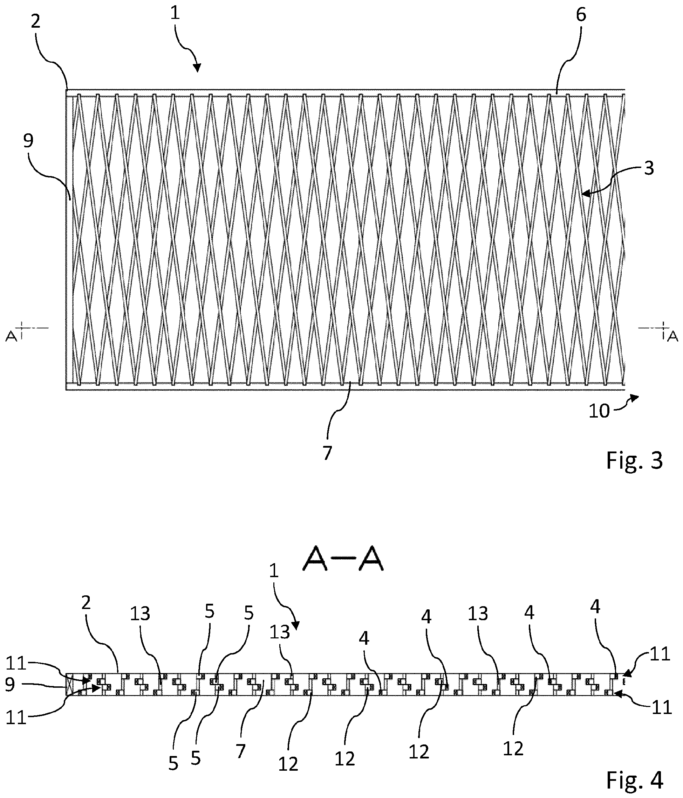

Figur 4, die eine Schnittansicht des Rahmens 2 des Holztafelbauelements 1 gemäß der in Figur 3 angedeuteten Schnittlinie A-A zeigt, verdeutlicht, dass jede Lage 4 von Querstreben 5 gemäß einem Raster 11 von Haltepunkten 12 mit den Rahmenschenkeln 6 und 7 verbunden sind. Somit weist also jeder der beiden Rahmenschenkel 6 und 7 jeweils ein derartiges Raster 11 von Haltepunkten 12 zur Befestigung von Querstreben 5 der einzelnen Lagen 4 an den Rahmenschenkeln 6 und 7 auf. Die Haltepunkte 12 der einzelnen Lagen 4 sind in Haltevertiefungen in Form von Haltenuten 13 vorgesehen. Die Haltenuten 13 sind quer zur Längserstreckung der beiden Rahmenschenkel 6 und 7 in die dem Innenraum 3 des Rahmens 2 zugewandten Innenseiten der Rahmenschenkel 6 und 7 eingebracht.

Die Querstreben 5 stecken mit ihren Enden zur Befestigung an den Rahmenschenkeln 6 und 7 gemäß dem für sie vorgesehenen Raster 11 an Haltepunkten 12 in den Haltenuten 13. Die Haltepunkte 12 der einzelnen Lagen 4 sind versetzt zueinander an den beiden Rahmenschenkeln 6 und 7 angeordnet. Die Haltepunkte 12 zur Befestigung der Querstreben 5 an den Rahmenschenkeln 6 und 7 verteilen sich somit auf die in die Rahmenschenkel 6 und 7 eingebrachten Haltenuten 13. Figur 4 zeigt, dass die Querstreben 5 der beiden inneren Lagen 4 von Querstreben in jeder zweiten Haltenut 13 festgelegt sind. In den übrigen Haltenuten 13 sind die Haltepunkte 12 der Querstreben 5 der beiden äußeren Lagen 4 von Querstreben 5 angeordnet.

Jedes Raster 11 von Haltepunkten 12 weist ein Rastermaß von 30,5 cm auf. Das bedeutet, dass zwei benachbarte Haltepunkte 12 eines Rasters 11 einer Lage 4 von Querstreben 5 einen Abstand von 30,5 cm zueinander aufweisen. Daraus ergibt sich, dass die Haltenuten 13, in denen die Haltepunkte 12 der unterschiedlichen Raster 11 der insgesamt vier Lagen 4 von Querstreben 5 angeordnet sind, paarweise einen Abstand zueinander haben, der dem halben Abstand zwischen zwei benachbarten Querstreben 5 einer Lage 4 und dem halben Abstand zwischen zwei benachbarten Halterpunkten 12 eines Rasters 11 und damit einem Abstand von 15,25 cm entspricht.

Das Holztafelbauelement 1 umfasst zwei Beplankungen 14 und 15, von denen jeweils eine an einer Seite des Rahmens 2 angeordnet ist. Jede der beiden Beplankungen 14 und 15 wird einerseits an den Rahmenschenkeln 6, 7, 9 und 10 des Rahmens 2 und andererseits auch an zumindest einzelnen der Querstreben 5 zumindest einer Lage 4 von Querstreben 5 befestigt.

Zwischenräume 16, die sich innerhalb des Rahmens 2 des Holztafelbauelements 1 auch nach Einbringen der Lagen 4 von Querstreben 5 ergeben können, werden bei Bedarf mit einem Füllstoff 23, beispielsweise mit Dämmstoff ausgefüllt. Der Rahmen 2 und die Querstreben 5 des in den Figuren gezeigten Holztafelbauelements 1 bestehen aus Holz beziehungsweise aus einem Holzwerkstoff.

Für die beidseitige Beplankung 14 und 15 des Holztafelbauelements 1 können Platten beispielsweise aus Beton, Gips, Naturgips, Lehm, Holz und/oder Holzfasern verwendet werden. Bevorzugt ist die Verwendung von OSB-Platten für die Beplankungen 14 und 15 des Holztafelbauelements 1.

Das zuvor beschriebene Holztafelbauelement 1 kann nach dem nachfolgend beschriebenen Verfahren hergestellt werden. Demgemäß ist vorgesehen, zunächst einen Rahmen 2 des Holztafelbauelements 1 bereitzustellen. Dies kann auf einer in den Figuren nicht gezeigten Fertigungsunterlage erfolgen. Anschließend wird eine erste Lage 4 von Querstreben 5 in den Rahmen 2 eingebracht. Dabei werden die Querstreben 5 schräg zu zwei sich gegenüberliegenden Rahmenschenkeln 6 und 7 des Rahmens 2 ausgerichtet.

Anschließend erfolgt die Befestigung der Querstreben 5 der ersten in den Rahmen 2 eingebrachten Lage 4 von Querstreben 5 an den beiden sich gegenüberliegend angeordneten Rahmenschenkeln 6 und 7 des Rahmens 2. Die zuvor erwähnten Haltenuten 13 können unmittelbar zuvor in die Rahmenschenkel 6 und 7 eingebracht werden. Alternativ ist auch die Verwendung von Rahmenschenkeln 6 und 7 möglich, in die die Haltenuten 13 bereits zu einem früheren Zeitpunkt eingebracht wurden. In einem weiteren Verfahrensschritt wird zumindest eine weitere Lage 4 von Querstreben 5 in den Rahmen 2 eingebracht. Auch hierbei werden die Querstreben 5 schräg zu den beiden sich gegenüberliegenden Rahmenschenkeln 6 und 7 des Rahmens 2 ausgerichtet. Anschließend erfolgt die Befestigung der Querstreben 5 der zumindest einen weiteren Lage 4 von Querstreben an den beiden sich gegenüberliegend angeordneten Rahmenschenkeln 6 und 7 des Rahmens 2.

Bei Bedarf können Querstreben 5 benachbarter Lagen 4 von Querstreben 5 untereinander verbunden werden. Vorzugsweise kann die Verbindung der Querstreben 5 untereinander an ihren Kreuzungspunkten 8 erfolgen. Zwischenräume 16 innerhalb des Rahmens 2 können mit Füllstoff 23, insbesondere mit einem Dämmstoff 23, gefüllt werden. Hierbei ist es möglich, den Füllstoff lagenweise, beispielsweise in Form von Dämmplatten, oder auch als gebundenes oder ungebundenes Schüttgut einzufüllen.

Bei einer Ausführungsform des Verfahrens ist vorgesehen, den Rahmen 2, insbesondere vor Einbringen einer ersten Lage 4 von Querstreben 5 auf einer Beplankung 14 des Holztafelbauelements 1, die gemäß dem Verfahren hergestellt werden soll, abzulegen. Danach kann der Rahmen 2 mit der Beplankung 14 verbunden werden. Anschließend kann das Einbringen der Lagen 4 von Querstreben 5 in den Rahmen 2 erfolgen. Sobald der Rahmen 2 mit den Querstreben 5 der unterschiedlichen Lagen 4 ausgesteift ist und gegebenenfalls vorhandene Zwischenräume 19 innerhalb des Rahmens 2 mit Füllstoff 23 befüllt sind, kann eine zweite Beplankung 15 auf die der ersten Beplankung 14 abgewandten Seite des Rahmens 2 aufgebracht werden, um den Rahmen 2 und damit das Holztafelbauelement 1 zu verschließen.

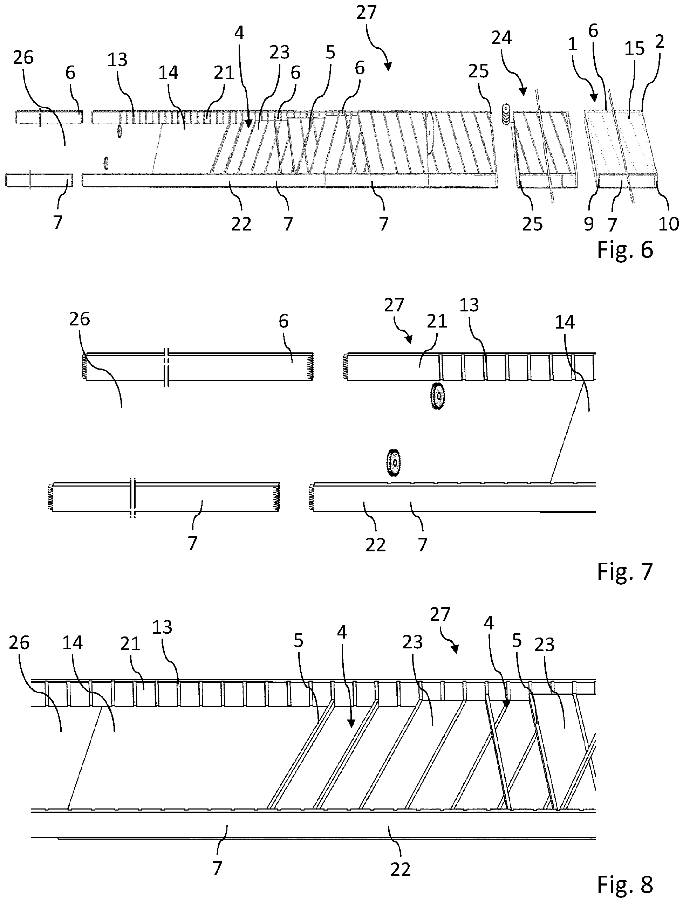

Anhand der Figuren 6 bis 10 lässt sich ein bevorzugtes Verfahren zur Herstellung des Holztafelbauelements 1 erläutern.

Figur 6 zeigt dabei eine Endlos-Fertigung von Holztafelbauelementen 1 aus einem Endlosstrang. Hierbei wird ein Segmentstrang 27 halbfertiger, noch verbundener Segmente 24 von Holztafelbauelementen 1 erzeugt und die Segmente 24 für die herzustellenden Holztafelbauelemente 1 in der gewünschten Länge von dem Segmentstrang 27 abgelängt. Die Figuren 7 bis 10 zeigen vergrößerte Detailausschnitte aus der Gesamtdarstellung der Figur 6.

Zur Herstellung eines Holztafelbauelements 1 ist vorgesehen, dass zunächst zumindest zwei sich gegenüberliegende Rahmenschenkel 6 und 7 eines noch zu schließenden Rahmens 2 eines Holztafelbauelements 1 bereitgestellt werden. Als Rahmenschenkel 6 und 7 werden hier vorzugsweise Längsschenkel eines rechteckigen Rahmens 2 des herzustellenden Holztafelbauelements 1 bereitgestellt.

Anschließend wird eine erste Lage 4 von Querstreben 5 zwischen die beiden Rahmenschenkel 6 und 7 eingebracht, wobei die Querstreben 5 schräg zu beiden Rahmenschenkeln 6 und 7 ausgerichtet werden oder sind. Anschließend erfolgt die Befestigung von Querstreben 5 der ersten Lage 4 an den beiden sich gegenüberliegend angeordneten Rahmenschenkeln 6 und 7 des Rahmens 2.

In einem nachfolgenden Verfahrensschritt wird zumindest eine weitere Lage 4 von Querstreben 5 zwischen die beiden Rahmenschenkel 6 und 7 eingebracht, wobei die Querstreben 5 quer zu den Rahmenschenkeln 6 und 7 ausgerichtet werden oder sind. Auch diese Querstreben 5 der zumindest einen weiteren Lage 4 werden an den beiden Rahmenschenkeln 6 und 7 befestigt. Zur Befestigung der Querstreben 5 an den Rahmenschenkeln 6 und 7 können sämtliche zuvor genannte Befestigungsarten verwendet werden.

Die zuvor erläuterten Verfahrensschritte können solange wiederholt werden, bis die vorgesehene Anzahl von Lagen 4 von Querstreben 5 zwischen die beiden Rahmenschenkeln 6 und 7 des herzustellenden Holztafelbauelements eingebracht sind.

Im in den Figuren 6 bis 10 gezeigten Ausführungsbeispiel werden insgesamt vier Lagen 4 von Querstreben 5 zwischen die beiden Rahmenschenkel 6 und 7 eingebracht. Bei Bedarf können auch hier Querstreben 5 benachbarter Lagen 4 von Querstreben 5 untereinander verbunden werden. Vorzugsweise kann die Verbindung der Querstreben 5 untereinander an ihren Kreuzungspunkten 8 erfolgen.

Eine Besonderheit des in den Figuren veranschaulichten Verfahrens sieht vor, dass mehrere Rahmenschenkel 6 und 7 zu zwei sich gegenüberliegenden Strängen 21 und 22 von Rahmenschenkeln 6 und 7 miteinander verbunden werden. Mit Hilfe der aus mehreren einzelnen Rahmenschenkeln 6 und 7 zusammengesetzten Strängen 21 und 22 von Rahmenschenkeln 6 und 7 lassen sich nahezu beliebig lange Holztafelbauelemente 1 herstellen. Je Strang 21 und 22 werden hierbei zumindest zwei Rahmenschenkel 6 und 7 miteinander keilverzinkt, wie dies insbesondere anhand von Figur 7 zu erkennen ist.

Bevor die Lagen 4 von Querstreben 5 zwischen die Rahmenschenkel 6 und 7 eingebracht werden, werden gemäß Figur 7 noch Haltevertiefungen für die Querstreben 5 in Form von Haltenuten 13 in die Rahmenschenkel 6 und 7 eingefräst.

Zwischenräume 16 zwischen den Querstreben 5 der einzelnen Lagen 4 werden anschließend mit Füllstoff 23 gefüllt. Dies kann, wie in Figur 8 angedeutet, vorzugsweise lagenweise erfolgen.

Figur 8 verdeutlicht, dass die Querstreben 5 lagenweise im Wechsel mit Füllstoff 23 zwischen die Rahmenschenkel 6 und 7 eingebracht werden.

Die zu Strängen 21 und 22 verbundenen Rahmenschenkel 6 und 7 werden auf einer ersten Beplankung 14 angeordnet und mit der Beplankung 14 verbunden. Als Beplankung 14 werden mehrere Platten stumpfgestoßen auf der Fertigungsunterlage, hier auf einem Transportmittel 26, beispielsweise auf einem Förderband oder einem Rollenförderer, geführt.

Wie Figur 8 andeutet, erfolgt die Anordnung der Stränge 21 und 22 von Rahmenschenkeln 6 und 7 auf den Platten der Beplankung 14 bevor die Lagen 4 von Querstreben 5 zwischen die Rahmenschenkel 6 und 7 eingebracht werden.

Es ist deutlich zu erkennen, dass die Lagen 4 von Querstreben 5 und der Füllstoff 23 zwischen die Stränge 21 und 22 von Rahmenschenkeln 6 und 7 plattenübergreifend auf bzw. über die Beplankung 14 aufgebracht werden.

Nachdem die Lagen 4 und der Füllstoff 23 lagenweise zwischen die beiden Stränge 21 und 22 von Rahmenschenkeln 6 und 7 eingebracht wurden, wird die zweite Beplankung 15 in einem nachgelagerten Verfahrensschritt aufgebracht und zumindest mit den Rahmenschenkeln 6 und 7 und gegebenenfalls auch mit den Rahmenschenkel 9 und 10 und/oder den Querstreben 5 der äußersten Lage 4 von Querstreben 5 verbunden.

Bei dem in den Figuren 6 bis 10 veranschaulichten Verfahren ist das Aufbringen der zweiten Beplankung 15 als letzter Verfahrensschritt vorgesehen, nachdem ein Segment 24 für ein einzelnes Holztafelbauelement 1 von einem Segmentstrang 27 noch miteinander verbundener Segmente 24 von Holztafelbauelementen 1 abgetrennt wurde.

Die Fertigung der Holztafelbauelemente 1 erfolgt auf einer Fertigungsunterlage 26, die in den Figuren 6 bis 10 nur angedeutet ist. Als Fertigungsunterlage dient ein Transportmittel 26, das beispielsweise ein Förderband, ein Rollenförderer und/oder auch ein Transportwagen sein kann.

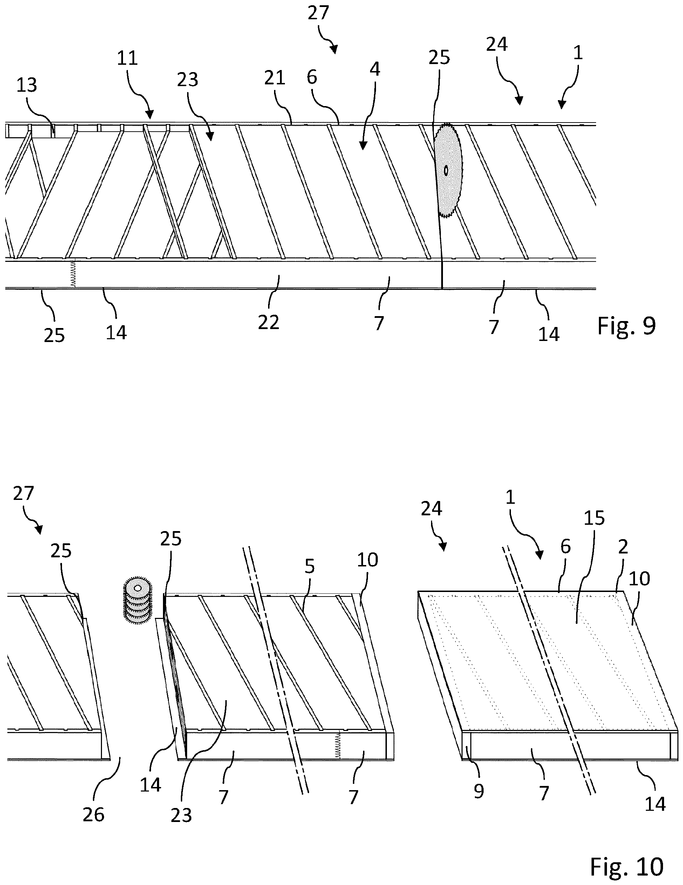

Zum Ablängen eines Segments 24 für ein Holztafelbauelement 1 werden die Stränge 21 und 22 von Rahmenschenkeln 6 und 7 nach Einbringen der Füllung aus Füllstoff 23 und den Lagen 4 von Querstreben 5 quer zu ihrer Längserstreckungsrichtung durchtrennt. Dieser Verfahrensschritt ist in Figur 9 dargestellt.

Zur Vorbereitung des abgetrennten Segments 24 für den nachfolgenden Herstellungsschritt wird die Füllung aus Querstreben 5 und Füllstoff 23 an den Trennschnitten 25 des Segments 24 entsprechend einer Stärke eines Querschenkels 9, 10, der zum Schließen des Rahmens 2 mit den Rahmenschenkeln 6 und 7 verbunden wird, entfernt. Im gezeigten Ausführungsbeispiel gemäß Figur 10 wird die Füllung abgefräst, wobei zu erkennen ist, dass die untere Beplankung 14 des Holztafelbauelements 1 hierbei nicht weiter zurückgeschnitten wird.

Anschließend werden weitere Rahmenschenkel 9 und 10, nämlich die bereits zuvor erwähnten Querschenkel 9 und 10 des Rahmens 2 mit den Rahmenschenkeln 6 und 7 zu dem geschlossenen Rahmen 2 verbunden. Danach wird, wie bereits zuvor erwähnt, die zweite Beplankung 15 auf die Rahmenschenkel 6 und 7 und auch die als Querschenkel 9 und 10 eingebrachten Rahmenschenkel aufgelegt und mit diesen verbunden (s. rechte Hälfte von Fig. 10 mit dem fertigen Holztafelbauelement 1).

Nachdem der Rahmen 2 beidseitig mit den Beplankungen 14 und 15 versehen ist, kann bei sämtlichen zuvor genannten Verfahrensvarianten zumindest eine Wandöffnung 17, beispielsweise für ein Fenster und/oder eine Tür, in das Holztafelbauelement 1 eingebracht, beispielsweise eingesägt werden. Bei Bedarf kann die Wandöffnung 17 mit einem Türrahmen oder einem Fensterrahmen und/oder mit einem Funktionselement, beispielsweise mit einer Tür und/oder einem Fenster und/oder einem Rollladen bestückt werden.

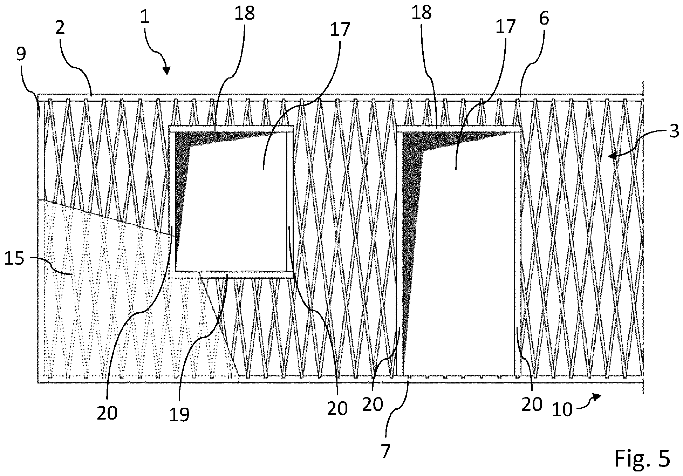

Figur 5 zeigt ein Beispiel eines Holztafelbauelements 1 in Form einer Holztafelbauwand. Das Holztafelbauelement 1 aus Figur 5 weist zwei Wandöffnungen 17 auf. Die in Figur 5 linke Wandöffnung 17 ist für ein Fenster vorgesehen und wird durch einen Sturzschenkel 18, einen Brüstungsschenkel 19 und zwei Leibungsschenkel 20 begrenzt. Die rechte der beiden Wandöffnungen 17 dient als Türöffnung und wird oberseitig durch einen Sturzschenkel 18 und seitlich durch zwei Leibungsschenkel 20 begrenzt. Die Sturzschenkel 18, die Leibungsschenkel 20 und der Brüstungsschenkel 19 bestehen aus Holz und können daher auch als Sturzhölzer, Leibungshölzer bzw. Brüstungsholz bezeichnet werden.

Bei einer bevorzugten Ausführungsform der zuvor beschriebenen Verfahren werden einzelne oder sämtliche Verfahrensschritte mit zumindest einem Roboter durchgeführt.

Das zuvor erwähnte Holztafelbauelement 1 eignet sich zur Verwendung als Innenwand, Außenwand und/oder Vorsatzwand eines Gebäudes, aber auch als Dachelement, Deckenelement und/oder Bodenelement eines Gebäudes. Die Verwendung des Holztafelbauelements 1 als Vorsatzwand ist besonders günstig, um Bestandsgebäude auf besonders effiziente Weise zu sanieren, insbesondere energetisch zu sanieren.

Die Erfindung befasst sich unter anderem mit einem Holztafelbauelement 1, die zumindest zwei innerhalb ihres Rahmens 2 angeordnete Lagen 4 von Querstreben 5 aufweist. Die Querstreben 5 sind zur Aussteifung des Holztafelbauelements 1 und ihres Rahmens 2 schräg zu einander gegenüberliegenden Rahmenschenkeln 6 und 7 des Rahmens 2 ausgerichtet.

### Bezugszeichenliste

- 1: Holztafelbauelement
- 2: Rahmen
- 3: Innenraum von 2
- 4: Lage von Querstreben
- 5: Querstreben
- 6: oberer Rahmenschenkel
- 7: unterer Rahmenschenkel
- 8: Kreuzungspunkt
- 9: Rahmenschenkel, Querschenkel
- 10: Rahmenschenkel, Querschenkel
- 11: Raster
- 12: Haltepunkte
- 13: Haltenuten
- 14: Beplankung
- 15: Beplankung
- 16: Zwischenraum
- 17: Wandöffnung
- 18: Sturzschenkel
- 19: Brüstungsschenkel
- 20: Leibungsschenkel
- 21: Strang von 6
- 22: Strang von 7
- 23: Füllstoff
- 24: Segment
- 25: Trennschnitt
- 26: Fertigungsunterlage/Transportmittel
- 27: Segmentstrang

## Patentansprüche

1. Holztafelbauelement (1) mit einem Rahmen (2) und mit zumindest zwei oder mehreren innerhalb des Rahmens (2) angeordneten Lagen (4) von Querstreben (5), die schräg zu einander gegenüberliegenden Rahmenschenkeln (6, 7) des Rahmens (2) ausgerichtet sind, **dadurch gekennzeichnet, dass** das Holztafelbauelement (1) vier Lagen (4) von Querstreben (5) aufweist, die in zueinander versetzten, zu einer Längserstreckungsrichtung der Rahmenschenkel (6,7) parallelen Ebenen innerhalb des Rahmens (2) und über die gesamte Tiefe des Rahmens (2) verteilt angeordnet sind, wobei sich Querstreben (5) benachbarter Lagen (4) kreuzen, und dass die beiden einander gegenüberliegenden Rahmenschenkel (6,7) für jede Lage (4) von Querstreben (5) jeweils ein Raster (11) von Haltepunkten (12) in oder an in die Rahmenschenkel (6,7) eingebrachten Haltevertiefungen aufweist, an/in denen die Querstreben (5) mit ihren Enden an den Rahmenschenkeln (6,7) befestigt sind.

2. Holztafelbauelement (1) nach dem vorherigen Anspruch, wobei Querstreben (5) der vier Lagen (4) mit den sich gegenüberliegenden Rahmenschenkeln (6,7) verbunden sind, insbesondere formschlüssig und/oder kraftschlüssig und/oder stoffschlüssig verbunden, vorzugsweise verklebt und/oder verleimt.

3. Holztafelbauelement (1) nach einem der vorherigen Ansprüche, wobei die Querstreben (5) in einem spitzen oder einem stumpfen Winkel zu einem der beiden Rahmenschenkel (6,7) ausgerichtet sind, insbesondere wobei die Querstreben (5) mit den Rahmenschenkeln (6,7) einen von einem rechten Winkel abweichenden Winkel aufspannen und/oder in einem Winkel von maximal 60 Grad zu einem der beiden Rahmenschenkel (6,7) geneigt sind.

4. Holztafelbauelement (1) nach einem der vorherigen Ansprüche, wobei die Querstreben (5) von zwei benachbarten Lagen (4) gegengleich geneigt sind und/oder wobei innerhalb einer Lage (4) benachbarte Querstreben (5) einen Abstand zwischen 10 cm und 70 cm, besonders bevorzugt von 30,5 cm zueinander aufweisen.

5. Holztafelbauelement (1) nach einem der vorherigen Ansprüche, wobei die beiden gegenüberliegenden Rahmenschenkel (6,7), mit denen die Querstreben (5) verbunden sind, Längsschenkel des Holztafelbauelements (1) sind und/oder länger als benachbarte Rahmenschenkel (9,10), insbesondere Querschenkel (9,10), des Rahmens (2) sind.

6. Holztafelbauelement (1) nach einem der vorherigen Ansprüche, wobei Querstreben (5) benachbarter Lagen (4), insbesondere sich kreuzende Querstreben (5) benachbarter Lagen (4), vorzugsweise in ihrem Kreuzungspunkt (8), miteinander verbunden sind, insbesondere formschlüssig, kraftschlüssig, stoffschlüssig miteinander verbunden sind.

7. Holztafelbauelement (1) nach einem der vorherigen Ansprüche, wobei die beiden Rahmenschenkel (6,7) für jede Lage (4) von Querstreben (5) jeweils ein Raster (11) von Haltepunkten (12) in oder an Haltevertiefungen, nämlich in oder an Haltenuten (13), aufweist, an/in denen die Querstreben (5) mit ihren Enden an den Rahmenschenkeln (6,7) befestigt sind, vorzugsweise wobei die Raster (11) von Haltepunkten (12) versetzt zueinander an den jeweiligen Rahmenschenkeln (6,7) angeordnet sind, und/oder wobei ein Abstand zwischen zwei benachbarten Haltevertiefungen, insbesondere von zwei benachbarten Haltenuten (13), in zumindest einem Rahmenschenkel (6,7) dem halben Abstand zwischen zwei benachbarten Haltepunkten (12) eines oder des Rasters (11) von Haltepunkten (12) einer Lage (4) von Querstreben (5) und/oder dem halben Abstand zwischen zwei benachbarten Querstreben (5) innerhalb einer Lage (4) von Querstreben (5) entspricht.

8. Holztafelbauelement (1) nach einem der vorherigen Ansprüche, wobei der Rahmen (2) zumindest einseitig, vorzugsweise beidseitig eine Beplankung (14,15) aufweist, vorzugsweise wobei die Beplankung (14,15) an den Rahmenschenkeln (6,7) und/oder an benachbarten Rahmenschenkeln (9,10), insbesondere an Querschenkeln (9,10), des Rahmens (2) und/oder an den Querstreben (5) zumindest einer Lage (4) befestigt ist.

9. Holztafelbauelement (1) nach einem der vorherigen Ansprüche, wobei Zwischenräume (16) innerhalb des Rahmens (2) mit einem Füllstoff (23), insbesondere mit Dämmstoff, ausgefüllt sind, und/oder wobei der Rahmen (2) und/oder die Querstreben (5) aus Holz und/oder aus einem Holzwerkstoff bestehen.

10. Verwendung eines Holztafelbauelements (1) nach einem der vorherigen Ansprüche als Innenwand, Außenwand, Vorsatzwand, Dachelement, Deckenelement und/oder Bodenelement in und/oder an einem Gebäude, insbesondere zur Renovierung, Sanierung und/oder energetischen Sanierung und/oder als Fassadenelement einer Vorhangfassade oder einer Modulfassade.

11. Verfahren zur Herstellung eines Holztafelbauelements (1) nach einem der vorherigen Ansprüche 1-9, umfassend zumindest die nachfolgenden Schritte:
a. Bereitstellung von zwei sich gegenüberliegenden Rahmenschenkeln (6,7), insbesondere Längsschenkeln (6,7), eines Rahmens (2) des Holztafelbauelements (1),
b. Einbringen einer ersten Lage (4) von Querstreben (5) zwischen die beiden Rahmenschenkel (6,7), wobei die Querstreben (5) schräg zu den beiden Rahmenschenkeln (6,7) ausgerichtet werden oder sind,
c. Befestigung von Querstreben (5) der ersten Lage (4) an den beiden sich gegenüberliegend angeordneten Rahmenschenkeln (6,7) des Rahmens (2),
d. Einbringen zumindest einer weiteren Lage (4) von Querstreben (5) zwischen die beiden Rahmenschenkel (6,7), wobei die Querstreben (5) schräg zu den Rahmenschenkeln (6,7) ausgerichtet werden oder sind,
e. Befestigung von Querstreben (5) der zumindest einen weiteren Lage (4) an den beiden Rahmenschenkeln (6,7),
f. wobei mehrere Rahmenschenkel (6,7) zu zwei sich gegenüberliegenden, voneinander beabstandeten Strängen (21,22) von Rahmenschenkeln (6,7) verbunden werden, um einen Segmentstrang (27) miteinander verbundener Segmente (24) von Holztafelbauelementen (1) zu erzeugen,
g. und wobei die Rahmenschenkel (6,7) durchtrennt werden und dabei ein Segment (24) für ein Holztafelbauelement (1) abgetrennt wird.

12. Verfahren nach Anspruch 11, wobei mehrere Rahmenschenkel (6,7), nämlich Längsschenkel (6,7), zu zwei sich gegenüberliegenden, voneinander beabstandeten Strängen (21,22) von Rahmenschenkeln (6,7) verbunden werden, um einen Segmentstrang (27) miteinander verbundener Segmente (24) von Holztafelbauelementen (1) zu erzeugen, insbesondere wobei je Strang (21, 22) zumindest zwei Rahmenschenkel (6,7) miteinander keilverzinkt werden.

13. Verfahren nach einem der vorherigen Ansprüche 11 und 12, wobei Haltevertiefungen, insbesondere Haltenuten (13), in die Rahmenschenkel (6,7) eingebracht, insbesondere eingefräst werden.

14. Verfahren nach einem der vorherigen Ansprüche 11 bis 13, wobei Querstreben (5) benachbarter Lagen (4) von Querstreben (5) untereinander verbunden werden, vorzugsweise wobei die Verbindung der Querstreben (5) untereinander an ihren Kreuzungspunkten (8) erfolgt.

15. Verfahren nach einem der vorherigen Ansprüche 11 bis 14, wobei Zwischenräume (16) zwischen den Querstreben (5) und/oder den Rahmenschenkeln (6,7) mit einem Füllstoff (23), insbesondere mit einem Dämmstoff, gefüllt werden, vorzugsweise wobei der Füllstoff (23) lagenweise, insbesondere zusammen mit den Lagen (4) von Querstreben (5), eingebracht wird.

16. Verfahren nach einem der vorherigen Ansprüche 11 bis 15, wobei die Rahmenschenkel (6,7), insbesondere als Stränge (21,22) von Rahmenschenkeln (6,7) auf einer ersten Beplankung (14,15) angeordnet und insbesondere mit der Beplankung (14, 15) verbunden werden, vorzugsweise bevor die vier Lagen (4) von Querstreben (5) zwischen die Rahmenschenkel (6,7) eingebracht werden und/oder wobei die Rahmenschenkel (6,7), insbesondere nach dem Einbringen der Lagen (4) von Querstreben (5) mit einer zweiten Beplankung (15) belegt werden und insbesondere verbunden werden.

17. Verfahren nach einem der vorherigen Ansprüche 11 bis 16, wobei die Rahmenschenkel (6,7) und/oder eine oder die Beplankung (14,15) zunächst auf einer Fertigungsunterlage, insbesondere auf ein Transportmittel (26), wie ein Förderband, ein Rollenförderer und/oder ein Transportwagen, abgelegt werden.

18. Verfahren nach einem der vorherigen Ansprüche 11 bis 17, wobei die Rahmenschenkel (6,7), insbesondere die Stränge (21,22) von Rahmenschenkeln (6,7) quer zu ihrer Längserstreckungsrichtung durchtrennt werden und dabei ein Segment (24) für ein Holztafelbauelement (1) abgetrennt wird, insbesondere wobei das Segment (24) von einem Segmentstrang (27) noch miteinander verbundener Segmente (24) für Holztafelbauelemente (1) abgetrennt wird.

19. Verfahren nach dem vorherigen Anspruch, wobei eine Füllung aus Querstreben (5) und/oder Füllstoff (23) an einem Trennschnitt (25) des Segments (24) entsprechend einer Stärke eines Querschenkels (9,10) entfernt, insbesondere abgefräst wird.

20. Verfahren nach einem der vorherigen Ansprüche 11 bis 19, wobei Rahmenschenkel, insbesondere Querschenkel (9,10), mit den Rahmenschenkeln (6,7) zu einem geschlossenen Rahmen (2) verbunden werden und/oder wobei eine zweite Beplankung (14, 15) auf die Rahmenschenkel (6,7) und/oder den geschlossenen Rahmen (2) gelegt und mit diesen verbunden wird.

21. Verfahren nach einem der vorherigen Ansprüche 11 bis 20, wobei in das Holztafelbauelement (1), insbesondere nach beidseitiger Anbringung einer Beplankung (14,15), zumindest eine Wandöffnung (17), beispielsweise für ein Fenster und/oder eine Tür, eingebracht wird.

22. Verfahren nach einem der vorherigen Ansprüche 11 bis 21, wobei zur Durchführung zumindest einzelner der Verfahrensschritte zumindest ein Roboter verwendet wird.

## Claims

1. Wooden panel component (1) comprising a frame (2) and comprising at least two or more layers (4), arranged within the frame (2), of transverse struts (5), which are aligned obliquely in relation to mutually opposite frame members (6, 7) of the frame (2), **characterized in that** the wooden panel component (1) has four layers (4) of transverse struts (5), which are distributed in mutually offset planes parallel to a direction of longitudinal extent of the frame members (6, 7) within the frame (2) and over the entire depth of the frame (2), wherein transverse struts (5) of adjacent layers (4) intersect, and **in that** the two mutually opposite frame members (6, 7), for each layer (4) of transverse struts (5), have a respective grid (11) of holding points (12) in or on holding depressions made in the frame members (6, 7), on/in which holding depressions the transverse struts (5) are fastened by way of their ends to the frame members (6, 7).

2. Wooden panel component (1) according to the preceding claim, wherein transverse struts (5) of the four layers (4) are connected, in particular connected by a form fit and/or by a force fit and/or by an integral bond, preferably adhesively bonded and/or glued, to the mutually opposite frame members (6, 7).

3. Wooden panel component (1) according to either of the preceding claims, wherein the transverse struts (5) are aligned at an acute or obtuse angle in relation to one of the two frame members (6, 7), in particular wherein the transverse struts (5) span an angle which is not a right angle with the frame members (6, 7) and/or are inclined at an angle of at most 60 degrees in relation to one of the two frame members (6, 7).

4. Wooden panel component (1) according to one of the preceding claims, wherein the transverse struts (5) of two adjacent layers (4) have diametrically opposite inclinations and/or wherein adjacent transverse struts (5) within one layer (4) are at a distance from one another of between 10 cm and 70 cm, particularly preferably 30.5 cm.

5. Wooden panel component (1) according to one of the preceding claims, wherein the two mutually opposite frame members (6, 7), to which the transverse struts (5) are connected, are longitudinal members of the wooden panel component (1) and/or are longer than adjacent frame members (9, 10), in particular transverse members (9, 10), of the frame (2).

6. Wooden panel component (1) according to one of the preceding claims, wherein transverse struts (5) of adjacent layers (4), in particular intersecting transverse struts (5) of adjacent layers (4), are connected to one another, in particular are connected to one another by a form fit, force fit or integral bond, preferably at their intersection point (8).

7. Wooden panel component (1) according to one of the preceding claims, wherein the two frame members (6, 7), for each layer (4) of transverse struts (5), have a respective grid (11) of holding points (12) in or on holding depressions, specifically in or on holding grooves (13), on/in which the transverse struts (5) are fastened by way of their ends to the frame members (6, 7), preferably wherein the grids (11) of holding points (12) are offset in relation to one another on the respective frame members (6, 7), and/or wherein a distance between two adjacent holding depressions, in particular two adjacent holding grooves (13), in at least one frame member (6, 7) corresponds to half the distance between two adjacent holding points (12) on a or the grid (11) of holding points (12) of a layer (4) of transverse struts (5) and/or to half the distance between two adjacent transverse struts (5) within a layer (4) of transverse struts (5).

8. Wooden panel component (1) according to one of the preceding claims, wherein the frame (2) has a panelling element (14, 15) at least on one side, preferably on both sides, preferably wherein the panelling element (14, 15) is fastened to the frame members (6, 7) and/or to adjacent frame members (9, 10), in particular to transverse members (9, 10), of the frame (2) and/or to the transverse struts (5) of at least one layer (4).

9. Wooden panel component (1) according to one of the preceding claims, wherein interspaces (16) within the frame (2) are filled with a filler (23), in particular with insulating material, and/or wherein the frame (2) and/or the transverse struts (5) consist of wood and/or a wooden material.

10. Use of a wooden panel component (1) according to one of the preceding claims as inner wall, outer wall, facing wall, roof element, ceiling element and/or floor element in and/or on a building, in particular for renovation, refurbishment and/or energy-efficient refurbishment and/or as façade element of a curtain wall or of a modular façade.

11. Method for producing a wooden panel component (1) according to one of the preceding Claims 1-9, comprising at least the following steps:
a. providing two mutually opposite frame members (6, 7), in particular longitudinal members (6, 7), of a frame (2) of the wooden panel component (1),
b. introducing a first layer (4) of transverse struts (5) between the two frame members (6, 7), wherein the transverse struts (5) are or have been aligned obliquely in relation to the two frame members (6, 7),
c. fastening transverse struts (5) of the first layer (4) to the two mutually opposite frame members (6, 7) of the frame (2),
d. introducing at least one further layer (4) of transverse struts (5) between the two frame members (6, 7), wherein the transverse struts (5) are or have been aligned obliquely in relation to the frame members (6, 7),
e. fastening transverse struts (5) of the at least one further layer (4) to the two frame members (6, 7),
f. wherein multiple frame members (6, 7) are connected to form two mutually opposite, spaced-apart sections (21, 22) of frame members (6, 7), in order to create a segment section (27) of interconnected segments (24) of wooden panel components (1),
g. and wherein the frame members (6, 7) are cut through and in the process a segment (24) for a wooden panel component (1) is cut off.

12. Method according to Claim 11, wherein multiple frame members (6, 7), specifically longitudinal members (6, 7), are connected to form two mutually opposite, spaced-apart sections (21, 22) of frame members (6, 7), in order to create a segment section (27) of interconnected segments (24) of wooden panel components (1), in particular wherein at least two frame members (6, 7) per strand (21, 22) are joined to one another by a finger joint.

13. Method according to either of the preceding Claims 11 and 12, wherein holding depressions, in particular holding grooves (13), are made, in particular milled, in the frame members (6, 7).

14. Method according to one of the preceding Claims 11 to 13, wherein transverse struts (5) of adjacent layers (4) of transverse struts (5) are connected to one another, preferably wherein the transverse struts (5) are connected to one another at their intersection points (8) .

15. Method according to one of the preceding Claims 11 to 14, wherein interspaces (16) between the transverse struts (5) and/or the frame members (6, 7) are filled with a filler (23), in particular with an insulating material, preferably wherein the filler (23) is introduced in layers, in particular together with the layers (4) of transverse struts (5).

16. Method according to one of the preceding Claims 11 to 15, wherein the frame members (6, 7), in particular in the form of sections (21, 22) of frame members (6, 7), are disposed on a first panelling element (14, 15) and in particular are connected to the panelling element (14, 15), preferably before the four layers (4) of transverse struts (5) are introduced between the frame members (6, 7), and/or wherein the frame members (6, 7) are covered with and in particular connected to a second panelling element (15), in particular after the layers (4) of transverse struts (5) have been introduced.

17. Method according to one of the preceding Claims 11 to 16, wherein the frame members (6, 7) and/or a or the panelling element (14, 15) are/is initially deposited on a manufacturing support, in particular on a transporting means (26), such as a conveyor belt, a roller conveyor and/or a transporting carriage.

18. Method according to one of the preceding Claims 11 to 17, wherein the frame members (6, 7), in particular the sections (21, 22) of frame members (6, 7), are cut through transversely in relation to their direction of longitudinal extent and, in the process, a segment (24) for a wooden panel component (1) is cut off, in particular wherein the segment (24) is cut off from a segment section (27) of still interconnected segments (24) for wooden panel components (1).

19. Method according to the preceding claim, wherein a filling of transverse struts (5) and/or filler (23) is removed, in particular milled away, at a separating cut (25) of the segment (24) in accordance with a thickness of a transverse member (9, 10).

20. Method according to one of the preceding Claims 11 to 19, wherein frame members, in particular transverse members (9, 10), are connected to the frame members (6, 7) to form a closed frame (2), and/or wherein a second panelling element (14, 15) is placed on and connected to the frame members (6, 7) and/or the closed frame (2).

21. Method according to one of the preceding Claims 11 to 20, wherein at least one wall opening (17), for example for a window and/or a door, is made in the wooden panel component (1), in particular after a panelling element (14, 15) has been applied on both sides.

22. Method according to one of the preceding Claims 11 to 21, wherein at least one robot is used to carry out at least individual steps of the method steps.

## Revendications

1. Composant de panneau en bois (1) avec un cadre (2) et avec au moins deux ou davantage de couches (4) de traverses (5) agencées à l'intérieur du cadre (2) qui sont orientées en biais par rapport à des branches de cadre (6, 7) se faisant face du cadre (2), **caractérisé en ce que** ce composant de panneau en bois (1) comporte quatre couches (4) de traverses (5) qui sont disposées dans des plans décalés entre eux parallèles à une direction d'extension longitudinale des branches de cadre (6, 7), à l'intérieur du cadre et réparties sur toute la profondeur du cadre (2), les traverses (5) des couches (4) voisines se croisant, et que les deux branches de cadre (6, 7) se faisant face présentent chacune pour chaque couche (4) de traverses (5) une trame (11) de points de fixation (12) dans ou sur des renfoncements de maintien ménagés dans les branches de cadre (6, 7) sur/dans lesquels les traverses (5) sont fixées avec leurs extrémités sur les branches de cadre (6, 7).

2. Composant de panneau en bois (1) selon la revendication précédente, dans lequel les traverses (5) des quatre couches sont reliées avec les branches de cadre (6, 7) se faisant face, en particulier reliées par engagement positif et/ou par engagement par force et/ou par liaison de matière, de préférence agglutinées et/ou collées.

3. Composant de panneau en bois (1) selon une des revendications précédentes, dans lequel les traverses (5) sont orientées selon un angle aigu ou obtus par rapport à une des deux branches de cadre (6, 7), en particulier dans lequel les traverses (5) forment avec les branches de cadre (6, 7) un angle différent d'un angle droit et/ou sont inclinées selon un angle de 60 degrés maximum par rapport à une des deux branches de cadre (6, 7).

4. Composant de panneau en bois (1) selon une des revendications précédentes, dans lequel les traverses (5) de deux couches (4) voisines sont inclinées en sens contraires et/ou dans lequel des traverses (5) voisines à l'intérieur d'une couche (4) présentent entre elles une distance de 10 cm à 70 cm, de manière particulièrement préférée de 30,5 cm.

5. Composant de panneau en bois (1) selon une des revendications précédentes, dans lequel les deux branches de cadre se faisant face (6, 7) avec lesquelles les traverses (5) sont reliées sont des branches longitudinales du composant de panneau en bois (1) et/ou sont plus longues que les branches de cadre voisines (9, 10), en particulier les branches transversales (9, 10) du cadre (2).

6. Composant de panneau en bois (1) selon une des revendications précédentes, dans lequel les traverses (5) des couches (4) voisines, en particulier les traverses (5) qui se croisent des couches (4) voisines, sont reliées entre elles, de préférence à leur point de croisement (8), en particulier reliées entre elles par engagement positif, par engagement par force, par liaison de matière.

7. Composant de panneau en bois (1) selon une des revendications précédentes, dans lequel les deux branches de cadre (6, 7) présentent chacune pour chaque couche (4) de traverses (5) une trame (11) de points de fixation (12) dans ou sur des renfoncements de maintien, notamment dans ou sur des rainures de maintien, sur/dans lesquels les traverses (5) sont fixées avec leurs extrémités sur les branches de cadre (6, 7), de préférence dans lequel les trames (11) de points de maintien (12) sont disposées de façon décalée entre elles sur les branches de cadre (6, 7) respectives, et/ou dans lequel une distance entre deux renfoncements de maintien voisins, en particulier de deux rainures de maintien (13) voisines, dans au moins une branche de cadre (6, 7) correspond à la moitié de la distance entre deux points de maintien (12) voisins d'une ou de la trame (11) de points de maintien (12) d'une couche (4) de traverses (5) et/ou à la moitié de la distance entre deux traverses (5) voisines à l'intérieur d'une couche (4) de traverses (5).

8. Composant de panneau en bois (1) selon une des revendications précédentes, dans lequel le cadre (8) présente au moins d'un côté et de préférence des deux côtés un revêtement (14, 15), lequel revêtement (14, 15) est de préférence fixé aux branches de cadre (6, 7) et/ou à des branches de cadre (9, 10) voisines, en particulier à des branches transversales (9, 10), du cadre (2) et/ou aux traverses (5) d'au moins une couche (4).

9. Composant de panneau en bois (1) selon une des revendications précédentes, dans lequel des interstices (16) à l'intérieur du cadre (2) sont remplis avec un matériau de remplissage (23), en particulier avec un matériau isolant, et/ou dans lequel le cadre (2) et/ou les traverses (5) sont en bois et/ou dans un matériau à base de bois.

10. Utilisation d'un composant de panneau en bois (1) selon une des revendications précédentes comme paroi intérieure, paroi extérieure, contre-cloison, élément de toiture, élément de revêtement et/ou élément de sol dans et/ou sur un bâtiment, en particulier pour la rénovation, la réhabilitation et/ou la réhabilitation énergétique et/ou comme élément de façade d'une façade suspendue ou d'une façade modulaire.

11. Procédé de fabrication d'un composant de panneau en bois (1) selon une des revendications 1 à 9, comprenant au moins les étapes suivantes :
a. fourniture de deux branches de cadre (6, 7) se faisant face, en particulier de branches longitudinales (6, 7), d'un cadre (2) du composant de panneau en bois (1),
b. insertion d'une première couche (4) de traverses (5) entre les deux branches de cadre (6, 7), lesquelles traverses (5) sont orientées en biais par rapport aux deux branches de cadre (6, 7),
c. fixation de traverses (5) de la première couche (4) aux deux branches de cadre (6, 7) se faisant face du cadre (2),
d. insertion d'au moins une autre couche (4) de traverses (5) entre les deux branches de cadre (6, 7), lesquelles traverses (5) sont orientées en biais par rapport aux deux branches de cadre (6, 7),
e. fixation de traverses (5) de l'au moins une autre couche (4) aux deux branches de cadre (6, 7),
f. plusieurs branches de cadre (6, 7) étant reliées à deux cordons (21, 22) de branches de cadre (6, 7) se faisant face et espacés entre eux afin de produire un cordon de segments (27) de segments (24) reliés entre eux de composants de panneau en bois (1)
g. et les branches de cadre (6, 7) étant sectionnées et un segment (24) séparé pour un composant de panneau en bois (1).

12. Procédé selon la revendication 11, selon lequel plusieurs branches de cadre (6, 7), notamment des branches longitudinales (6, 7), sont reliées à deux cordons (21, 22) de branches de cadre (6, 7) espacés entre eux afin de produire un cordon de segments (27) de segments (24) reliés entre eux de composants de panneau en bois (1), en particulier au moins deux branches de cadre (6, 7) par cordon (21, 22) étant assemblées entre elles par jointure digitale.

13. Procédé selon les revendications précédentes 11 et 12, selon lequel des renfoncements de maintien, en particulier des rainures de maintien (13), sont ménagés, en particulier fraisés dans les branches de cadre (6, 7).

14. Procédé selon les revendications précédentes 11 à 13, selon lequel des traverses (5) de couches (4) voisines de traverses (5) sont reliées entre elles, la liaison des traverses (5) entre elles se faisant à leurs points de croisement (8).

15. Procédé selon les revendications précédentes 11 à 14, selon lequel des interstices (16) entre les traverses (5) et/ou les branches de cadre (6, 7) sont remplis avec un matériau de remplissage (23), en particulier avec un matériau isolant, de préférence le matériau de remplissage (23) étant introduit par couches, en particulier avec les couches (4) de traverses (5).

16. Procédé selon les revendications précédentes 11 à 15, selon lequel les branches de cadre (6, 7) sont disposées, en particulier sous la forme de cordons (21, 22) de branches de cadre (6, 7), sur un premier revêtement (14, 15) et en particulier reliées avec le revêtement (14, 15), de préférence avant que les quatre couches (4) de traverses (5) soient introduites entre les branches de cadre (6, 7) et/ou selon lequel les branches de cadre (6, 7) sont revêtues avec un deuxième revêtement (15), en particulier après l'introduction des couches (4) de traverses (5), et en particulier sont reliées.

17. Procédé selon les revendications précédentes 11 à 16, selon lequel les branches de cadre (6, 7) et/ou un ou le revêtement (14, 15) sont d'abord appliqués sur un support de fabrication, en particulier sur un moyen de transport (26) tel qu'une bande transporteuse, un transporteur à rouleaux et/ou un chariot de transport.

18. Procédé selon les revendications précédentes 11 à 17, selon lequel les branches de cadre (6, 7), en particulier les cordons (21, 22) de branches de cadre (6, 7), sont sectionnés transversalement à leur direction d'extension longitudinale et un segment (24) séparé pour un composant de panneau en bois (1), en particulier le segment (24) étant séparé d'un cordon de segments (27) de segments (24) encore reliés entre eux pour des composants de panneau en bois (1).

19. Procédé selon la revendication précédente, selon lequel une garniture de traverses (5) et/ou de matériau de remplissage (23) est enlevée, en particulier fraisée, au niveau d'une découpe (25) du segment (24) en fonction d'une épaisseur d'une branche transversale (9, 10).

20. Procédé selon les revendications précédentes 11 à 19, selon lequel des branches de cadre, en particulier des branches transversales (9, 10), sont reliées avec les branches de cadre (6, 7) pour former un cadre fermé (2) et/ou selon lequel un deuxième revêtement (14, 15) est déposé sur les branches de cadre (6, 7) et/ou le cadre fermé (2) et relié avec ceux-ci.

21. Procédé selon les revendications précédentes 11 à 20, selon lequel au moins une ouverture de paroi (17), par exemple pour une fenêtre et/ou une porte, est ménagée dans le composant de panneau en bois (1), en particulier après la pose d'un revêtement (14, 15) sur les deux faces.

22. Procédé selon les revendications précédentes 11 à 21, selon lequel au moins un robot est utilisé pour la réalisation d'au moins certaines des étapes de procédé.
